# EUROPEAN PATENT APPLICATION

(11) **EP 2 790 303 A1**
(43) Date of publication of application: **15.10.2014**
(21) Application number: 13001795.7
(22) Date of filing: 08.04.2013
(51) Int. Cl.: H02K 7/116

(54) **Driving device**

(71) Applicant: Nowak Euzebiusz, 42-256 Olsztyn (PL)
(72) Inventor: Nowak Euzebiusz, 42-256 Olsztyn (PL)

(57) **Abstract**

The object of the invention is a low-speed driving device. The device is constructed of the fixed frame (1), driving shaft (2), steel ring (3), steel wheels (4) to which toothed wheels (5) are fixed, and rings (6). An electric motor (7) is placed on the circumference of the toothed wheels (5) along with two driven shafts on which two small toothed wheels are installed. The electric motor (7) is fixed with use of holders (8) to the steel ring (3).

The device is designed for driving many machines and devices.

## Description

The object of the invention is a low-speed driving device.

The device is designed for driving water pumps, as well as it can be advantageously used for driving various low-speed machinery and devices.

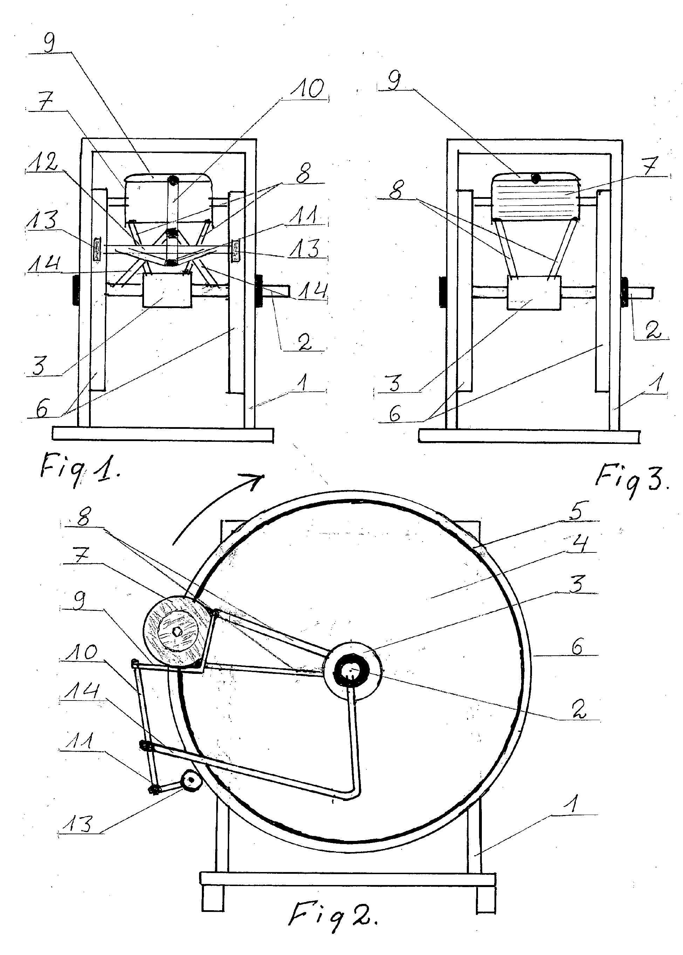

According tour knowledge on the latest technology, as of the date of the application, no similar solutions have been developed. The driving device is, according to the invention, constructed of (Fig. 1): fixed frame 1 in which a rotary shaft is installed 2. Bearings are installed on the rotary shaft 2, on which steel tube-shaped ring 3 is assembled. Rotary shaft 2 rotates independent of ring 3. Two steel wheels 4 are mounted to the fixed frame 1. They are arranged parallel and at certain distance from each other. Big ring-shaped toothed wheels 5 are assembled to both steel wheels 4 from the inside (Fig. 2 presents the cross-section). Smooth rings 6 are permanently fixed on the outside of the toothed wheels 5. An electric motor 7 is placed on the circumference of big toothed wheels 5 (Fig. 1) along with driving shafts placed on both sides of the electric motor 7. Small toothed wheels are installed on driving shafts of the electric motor 7. An electric motor 7 is mounted in a stable manner with use of four holders 8 (Fig. 2) fasted on one side to fabric holders of the motor, and to the steel ring 3 on the other side. The electric motor 7 is equipped with a holder 9 to which a bar 10 is mounted. The bar as a simple lever increases the strength of the electric motor 7. A holder 11 is placed on the other end of the bar 10, under which wheels 13 are installed at both ends of the transverse axle 12 (Fig. 1). Holder 11, axle 12 and wheels 13 are support for bar 10. Flexible arms 14 are fixed to the bar 10 (Fig. 2). They are assembled on the other side to the driving shaft 2 on both sides of the steel ring 3. An arrow shows direction of the motor movement (Fig. 2). The electric motor 7 moves on the circumference of big toothed wheels 5. To avoid chaos, drawings do not cover electric installation. Combustion engine is used instead of the electric engine 7 without any other changes. The driving device from behind and the arrangement o electric motor 7 are presented on Fig. 3. The low-speed driving device transmits the obtained force thought the driving shaft 2 to the driven machines or subsequent driving devices.

The efficiency of the low-speed driving device is 99.9%.

## Claims

1. The low-speed driving device is constructed of a fixed frame in which a rotary shaft is installed. Bearings are installed on the rotary shaft, on which steel tube-shaped ring is assembled. Two steel wheels are mounted to the fixed frame. They are arranged parallel and at certain distance from each other. Big ring-shaped toothed wheels are assembled to both steel wheels from the inside. Smooth rings are permanently fixed on the outside of the toothed wheels. An electric motor is placed on the circumference of big toothed wheels along with driving shafts placed on both sides of the electric motor. Small toothed wheels are installed on driving shafts of the electric motor. An electric motor is mounted in a stable manner with use of four holders fasted on one side to fabric holders of the electric motor, and to the steel ring assembled to the driving shaft on the other side. The electric motor is equipped with a holder to which a bar is mounted. The bar is a simple single- or double-arm lever. A holder is placed on the other end of the bar, under which wheels are installed at both ends. Flexible arms are fixed to the bar (simple lever). They are assembled on the other side to the driving shaft on both sides of the steel ring. Combustion engine is used instead of the electric engine without any other changes. The low-speed driving device driven with electric energy is **characterized in that** it is equipped with at least one electric motor (7) (Fig. 1) with two driving wheels. It is placed on the circumference of big toothed wheels (5) (Fig. 1) assembled to the steel wheels (4). Steel wheels (4) are assembled to the fixed frame (1), to which driven shaft (2) is assembled as well. Bearings are installed on the driving shaft (2) (Fig.2). Tube-shaped ring (3) is placed on the bearings. Smooth rings (6) are fixed on the outside side of both big toothed wheels (5) (Fig. 2) at a certain distance. Small toothed rings are installed on driven shafts of the electric motor (7). The electric motor (7) Fig. 2) is beneficially assembled through four holders (8), which are assembled on one side to fabric holders of the electric motor (7), and to the steel ring (3) on the other side. A holder (9) is installed on the electric motor (7) to which a bar (10) is fixed, which beneficially as a simple lever increases the force of the electric motor (7). A holder (11) is placed on the other end of the bar, under which wheels (13) are installed at both ends of the transverse axle (12) (Fig. 1). Holder (11), axle (12) and wheels (13) are support points.

2. The low-speed driving device as claimed in claim 1 is **characterized in that** it is equipped in at least one big toothed wheel (5).

3. The low-speed driving device as claimed in claim 1 is **characterized in that** it is equipped in at least one smooth ring (6).

4. The low-speed driving device as claimed in claim 1 is **characterized in that** it is equipped in at least one bar (10) functioning as a simple single-arm lever.

5. The low-speed driving device as claimed in claim 1 is **characterized in that** it is equipped in at least one bar (10) functioning as a simple double-arm lever.

6. The low-speed driving device as claimed in claim 1 is **characterized in that** it is equipped in at least one steel ring (3).

7. The low-speed driving device as claimed in claim 1 is **characterized in that** it is equipped in at least one support point for the simple lever.

8. The low-speed driving device as claimed in claim 1 is **characterized in that** it is equipped in at least one combustion engine instead of the electric engine.
